# EUROPÄISCHE PATENTANMELDUNG

(11) **EP 2 163 983 A1**
(43) Veröffentlichungstag der Anmeldung: **17.03.2010**
(21) Anmeldenummer: 08016196.1
(22) Anmeldetag: 15.09.2008
(51) Int. Cl.: G06F 3/12, G06F 17/24

(54) **Verfahren zur Erzeugung einer Druckdatei aus Datenobjekten eines Speichers**

(71) Anmelder: Deutsche Post AG, 53113 Bonn (DE)
(72) Erfinder: Karakus, Sakine, D-51469 Bergisch Gladbach (DE)
(74) Vertreter: Jostarndt, Hans-Dieter

(57) **Zusammenfassung**

Die Erfindung betrifft ein Verfahren zur Erzeugung einer Druckdatei (40) aus Daten, die in einem Speicher (22) auf einem Applikationsserver (20) hinterlegt sind, wobei die Daten vor der Erzeugung der Druckdatei (40) gleichzeitig über Web Browser (11;11') jeweils auf einer Anzeige (13;13') mehrerer Computersysteme (10;10') zur Ansicht bereitgestellt werden. Die Daten werden durch eine web-basierte Datenbearbeitungskomponente (23;24) mittels jeweils einer Eingabeeinrichtung (12;12') der Computersysteme (10;10') erstellt und bearbeitet, wobei erstellte und bearbeitete Daten in dem Speicher (22) abgelegt und über die Web Browser (11;11') allen Anzeigen (13;13') der mehreren Computersysteme (10;10') zur Ansicht bereitgestellt werden. Das Verfahren zeichnet sich dadurch aus, dass die Daten in dem Speicher (22) in Form von mehreren Datenobjekten hinterlegt werden, wobei eine Druckseite (71;71') der Druckdatei (40) aus wenigstens zwei Datenobjekten besteht, und ein durch die Datenbearbeitungskomponente (23;24) neu erstelltes oder bearbeitetes Datenobjekt über die Web Browser (11 ;11') in Echtzeit allen Anzeigen (13;13') der Computersysteme (10;10') übermittelt wird. Dabei wird nur das betreffende Datenobjekt neu an die Web Browser (11;11') übermittelt. Eine Anwendung (21) auf dem Applikationsserver (20) erhält nach Abschluss der Bearbeitungsvorgänge durch die Datenbearbeitungskomponente (23;24) einen Konvertierungsbefehl, woraufhin aus den Datenobjekten einer Druckseite (71;71') eine Druckdatei (40) erzeugt wird.

## Beschreibung

Die Erfindung betrifft ein Verfahren zur Erzeugung einer Druckdatei aus Daten, die in einem Speicher auf einem Applikationsserver hinterlegt sind, wobei die Daten vor der Erzeugung der Druckdatei gleichzeitig über Web Browser jeweils auf einer Anzeige mehrerer Computersysteme zur Ansicht bereitgestellt werden. Die Daten werden durch eine web-basierte Datenbearbeitungskomponente mittels jeweils einer Eingabeeinrichtung der Computersysteme erstellt und bearbeitet, wobei erstellte und bearbeitete Daten in dem Speicher abgelegt und über die Web Browser allen Anzeigen der mehreren Computersysteme zur Ansicht bereitgestellt werden.

Zunehmend besteht der Bedarf nach Online-Anwendungen, über die vorzugsweise mehrere Nutzer angebotene Funktionen nutzen können, um beispielsweise Texte, Tabellen und/oder Bilder zu erstellen und fortlaufend zu bearbeiten. Für den Zugriff auf eine solche web-basierte Applikation benötigt ein Nutzer lediglich einen Internetanschluss und einen Web-Browser auf seinem lokalen Computer. Die Funktionen der Applikation werden dem Nutzer über seinen Web-Browser zur Verfügung gestellt. In besonders vorteilhaften Ausgestaltungen ist es dabei möglich, dass mehrere Personen eine Datei gemeinsam in Echtzeit erstellen und bearbeiten können. Dazu muss ein Moderator üblicherweise lediglich die E-Mail-Adressen der Personen eingeben, mit denen er an einem bestimmten Dokument zusammenarbeiten möchte, wodurch diese Personen eingeladen werden. Jede der eingeladenen Personen kann sich daraufhin anmelden und das freigegebene Dokument lesen und/oder bearbeiten. Dabei geben Dokumentversionen genau an, was, wann und von wem geändert wurde. Die erstellten und bearbeiteten Dateien werden üblicherweise zentral auf einem Server gehalten, sie können jedoch bei Bedarf auch von den beteiligten Personen auf einen lokalen Computer herunter geladen werden.

Über eine solche Online-Anwendung können einer Vielzahl von Nutzern verschiedene Office-Suites verfügbar gemacht werden, wobei es sich bei einer Office-Suite um eine Sammlung von typischen Büroapplikationen handeln kann, die aufeinander abgestimmt sind. Beispielsweise können eine Textverarbeitung, eine Tabellenkalkulation, ein Präsentationsprogramm und/oder ein Datenbankprogramm angeboten werden.

Ein Beispiel für eine solche Online Office Suite ist derzeit die Applikation *Google Text & Tabellen*, die von dem Unternehmen Google Inc. mit Sitz in Mountain View, Kalifornien, USA, als Beta-Version angeboten wird. Ferner ermöglicht es die Beta-Version des Produkts *Adobe*® *Buzzword*® des Unternehmens Adobe Systems, Inc. mit Sitz in San Jose, Kalifornien, USA, ebenfalls mehreren Nutzern ein angebotenes Textverarbeitungsprogramm online zu nutzen

Derartige Online-Anwendungen haben den Vorteil, dass ein Nutzer nicht für jede Funktion, die er nutzen möchte, ein entsprechendes Programm auf seinem lokalen Computer installieren muss, da es sich um eine web-basierte Applikation handelt, auf die über jeden Web-Browser zugegriffen werden kann. Auch die erstellten und von mehreren Personen bearbeitbaren Dateien müssen nicht lokal bei jedem Nutzer gespeichert werden, sondern werden zentral verwaltet. Ein Nutzer ist somit unabhängig von einem bestimmten Computer, auf dem eine Anwendung installiert und Daten gespeichert sind, sondern kann an jedem Ort, der über einen Internetanschluss und einen Web-Browser verfügt, Dateien erstellen und bearbeiten.

Dieser Vorteil web-basierter Applikationen ist beispielsweise für die Erstellung von Print-Erzeugnissen wie Hochzeitszeitungen einsetzbar, da hierbei die Wort- und Bildbeiträge mehrerer Personen gesammelt und zu einer Hochzeitszeitung zusammengefügt werden müssen. Dabei ist es oftmals nicht jeder Person zuzumuten, hierfür ein Programm auf ihrem Computer zu installieren. Beispielsweise offenbart die englische Zusammenfassung der koreanischen Patentanmeldung mit der Veröffentlichungsnummer KR 10 2005 000 5943 A, dass die Erstellung einer personalisierten Hochzeitszeitung über eine kostenpflichtige Website angeboten werden kann. Der Nutzer kann für die Erstellung der Zeitung ein Template auswählen und damit über die Website die gewünschte Zeitung erstellen.

Neben der typischen Anwendung für Hochzeitszeitungen ist es jedoch auch möglich, web-basierte Applikationen für die gemeinsame Erstellung jeglicher Print-Erzeugnisse wie beispielsweise Vereinszeitungen, Geburtstagsanzeigen, Werbebroschüren, etc. einzusetzen. Bei der Erstellung eines solchen Print-Erzeugnisses werden üblicherweise von einer oder mehreren Personen Texte und Bilder bereitgestellt und den betreffenden Personen auf einer Anzeige wie einem Bildschirm angezeigt. Der Erstellungsprozess kann dabei nicht nur die Erzeugung der Dateninhalte, sondern auch eine Bearbeitung umfassen, wobei es möglich sein sollte, dass jeder Nutzer online in Echtzeit den Erstellungsprozess verfolgen kann.

Um nach Abschluss dieses Erstellungsprozesses einen hochwertigen Ausdruck der Texte zu erhalten, werden die erstellten Texte typischerweise als Datei einem Druckdienstleister übermittelt, der die Datei beispielsweise auf einem Digitaldrucker ausdruckt. Als Dateiformat für eine solche Datei wird oftmals das pdf-Format (Portable Document Format) verwendet, da es sich um ein plattformübergreifendes Dokumentenformat handelt, das besonders gut für einen solchen Datentransfer geeignet ist, bei dem Inhalte nach der Erstellung in keiner Weise verändert werden sollen.

Aufgabe der Erfindung ist es daher, ein Verfahren zur Erzeugung einer Druckdatei bereitzustellen, bei dem mehrere Nutzer von Computersystemen gleichzeitig über eine Online-Applikation in Echtzeit an der Erstellung eines Druckerzeugnisses mitwirken können.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-6.

Das erfindungsgemäße Verfahren gemäß dem Oberbegriff des Anspruchs 1 zeichnet sich dadurch aus, dass Daten in einem Speicher in Form von mehreren Datenobjekten hinterlegt werden, wobei eine Druckseite einer Druckdatei aus wenigstens zwei Datenobjekten besteht. Ein durch eine Datenbearbeitungskomponente neu erstelltes oder bearbeitetes Datenobjekt wird über Web Browser in Echtzeit allen Anzeigen von Computersystemen übermittelt, wobei nur das betreffende Datenobjekt neu an die Web Browser übermittelt wird. Eine Anwendung auf dem Applikationsserver erhält nach Abschluss der Bearbeitungsvorgänge durch die Datenbearbeitungskomponente einen Konvertierungsbefehl, woraufhin aus den Datenobjekten einer Druckseite eine Druckdatei erzeugt wird. Es kann ein Datenobjekt für wenigstens ein Bildobjekt und wenigstens ein Textobjekt im Speicher hinterlegt werden.

Die erfindungsgemäße Objekt-bezogene Speicherung von Dateninhalten in dem Speicher einer Online-Applikation ermöglicht eine Übermittlung von Datenänderungen an mehrere Web Browser von Nutzern dadurch, dass stets nur ein geändertes Datenobjekt übermittelt wird, während unveränderte Datenobjekte nicht erneut übermittelt werden. Um aus diesen Datenobjekten eine Druckdatei für den Ausdruck eines Druckerzeugnisses zu erstellen, werden die Datenobjekte wenigstens einer Druckseite des Druckerzeugnisses in eine Druckdatei konvertiert und können anschließend ausgedruckt werden. Vorzugsweise wird eine Druckdatei im pdf-Format erzeugt, und die Druckdatei kann mehrere Druckseiten beinhalten.

In einem Ausführungsbeispiel der Erfindung wird der Konvertierungsbefehl von der Online-Anwendung an ein Konvertierungsmodul übermittelt, welches die Druckdatei erzeugt, und die Druckdatei wird von dem Konvertierungsmodul an die Anwendung übermittelt, welche sie einem Drucksystem bereitstellt, das aus der Druckdatei ein Druckerzeugnis druckt.

Eine web-basierte Datenbearbeitungskomponente kann beispielsweise wenigstens einen Texteditor und/oder eine Bildbearbeitungseinheit umfassen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

### Von den Abbildungen zeigt:

- Fig. 1: ein Ausführungsbeispiel einer Anordnung von Komponenten zur Durchführung des erfindungsgemäßen Verfahrens;
- Fig. 2: eine schematische Darstellung der erfindungsgemäßen Speicherung von Datenobjekten und daraus resultierende Druckseiten eines Druckerzeugnisses;
- Fig. 3: Verfahrensschritte bei einem Ausführungsbeispiel des erfindungsgemäßen Verfahrens; und
- Fig. 4: eine schematische Darstellung der Übertragung von Textzeilen von einem Texteditorfeld in die Druckseite eines pdf-Dokuments.

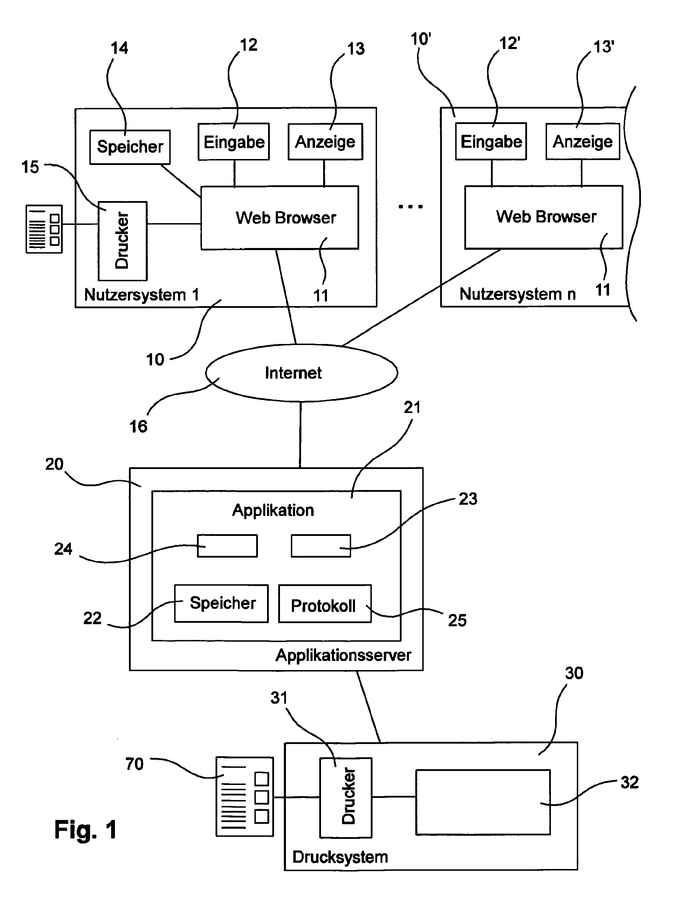

Das erfindungsgemäße Verfahren eignet sich insbesondere für den Einsatz in Online-Applikationen, mit denen mehrere Personen gemeinsam ein Druckerzeugnis wie eine Hochzeitszeitung oder eine Vereinszeitung erstellen. Das Verfahren kann dabei durch eine Anordnung von Komponenten durchgeführt werden, wie sie beispielhaft in Fig. 1 dargestellt ist. Hierbei ist wenigstens ein erstes Computersystem 10 vorgesehen, dass sich im Bereich eines ersten Nutzers befindet. Bei dem Computersystem 10 kann es sich um einen lokalen Computer/PC oder beispielsweise auch um ein tragbares Gerät wie ein Laptop oder ein Mobiltelefon mit Internetfunktion handeln. Dieses erste Computersystem 10 im Bereich eines Nutzers wird im Folgenden auch als Nutzersystem bezeichnet.

Das Nutzersystem 10 weist einen Web Browser 11 oder eine ähnliche Anwendung auf, welche die Verbindung des Nutzersystems über eine Internetverbindung 16 zu einem zweiten Computersystem 20 ermöglicht, das einen Applikationsserver umfasst, auf dem vom Nutzer gewünschte Funktionen online angeboten werden. Bei den angebotenen Funktionen handelt es sich beispielsweise wenigstens um Textverarbeitungs- und Bildbearbeitungsfunktionen, mit denen sich ein hochwertiges Druckerzeugnis gestalten lässt. Vorzugsweise können mehrere Nutzersysteme bis zu einer beliebigen Anzahl n über das Internet Zugriff auf die Funktionen des Applikationsservers 20 nehmen, wobei jedes weitere Nutzersystem 10' ebenfalls über einen Web Browser 11' verfügt.

Die Konfiguration der Nutzersysteme kann variieren. Zweckmäßigerweise umfassen sie jedoch wenigstens einen Speicher 14, eine Eingabeeinrichtung 12 (12') und eine Anzeige 13 (13'). Bei der Anzeige 13 handelt es sich beispielsweise um einen separaten Monitor, der an einen Computer angeschlossen ist oder um ein integriertes Display, wie es beispielsweise bei Laptops der Fall ist. Bei der Eingabeeinrichtung 12 kann es sich um eine Tastatur in Verbindung mit einem Zeigegerät wie einer EDV-Maus handeln, über welche Bewegungen des Mauszeigers durch einen Nutzer auf die Anzeige 13 und das Betriebssystem des jeweiligen Computersystems 10 übertragen werden können. Anzeige 13 und Eingabeeinrichtung 12 können auch durch einen Touch-Screen miteinander kombiniert werden. Sowohl die Anschläge einer Tastatur, Bewegungsinformationen eines Mauszeigers oder Berührungsinformationen eines Touchscreens können über den Web Browser 10 an den Applikationsserver 20 übermittelt werden, welcher die mit den Informationen verbundenen Befehle ausführt. Ein Nutzersystem 10 kann ferner an einen Drucker 15 angeschlossen sein.

Das Frontend bei den Nutzern kann beispielsweise über eine bei web-basierten Anwendungen übliche Flash-Technologie realisiert werden. Durch die Kombination von Animation und Programmierung ist Flash besonders geeignet, um komplexe Websites und browser-basierte Anwendungen zu programmieren. Das Frontend kann beispielsweise in ActionScript 3 realisiert werden, wobei auf dem Computersystem des Nutzers ein entsprechender Flash-Plugin installiert sein muss.

Auf dem Applikationsserver des zweiten Computersystems 20 wird eine Anwendung 21 betrieben, welche verschiedene Funktionen bereitstellt. Für dieses Backend-Framework kann beispielsweise PRADO (PHP Rapid Application Development Object-oriented) eingesetzt werden. PRADO ist ein komponenten- und ereignisbasiertes Framework für die Entwicklung von Web-Applikationen. Im Mittelpunkt steht dabei die ereignis-orientierte Programmierung, welche die Benutzerinteraktion in den Vordergrund stellt. Für die Frontendentwicklung stellt PRADO eine Vielzahl von Komponenten zur Verfügung, so dass sich Benutzeroberflächen bausteinartig zusammenstellen lassen. Die Kommunikation zwischen Frontend und Backend kann mittels Flash-Remoting durchgeführt werden. Als Web-Server kann Apache2 zum Einsatz kommen. Jede Kommunikation mit den Webservern wird mittels HTTPS verschlüsselt.

Insbesondere umfasst die Anwendung 21 auf dem Server 20 eine Softwarekomponente, die als Datenbearbeitungskomponente zu bezeichnen ist. Vorzugsweise umfasst diese Datenbearbeitungskomponente wenigstens einen Texteditor 24 und eine Bildbearbeitungseinheit 23. Diese beiden Einheiten sind webbasiert und werden den Nutzern der Computersysteme 10 und 10' über das Internet angeboten, um ein Druckerzeugnis aus Texten und Bildern zu erstellen. Der Texteditor 23 stellt dem Nutzer übliche Funktionen für die Erstellung und Bearbeitung von Textinformationen bereit, die typischerweise über eine Toolbox in Verbindung mit einem Texteditorfeld angeboten werden. Dabei kann der Nutzer vorzugsweise wenigstens die Anordnung eines Textes innerhalb des Editorfeldes, die Schriftgröße und die Schriftart eines Textes wählen.

Die Bildbearbeitungseinheit 23 stellt dem Nutzer übliche Funktionen für die Bearbeitung von Bildern bereit, die typischerweise ebenfalls über eine Toolbox angeboten werden. Dabei kann der Nutzer beispielsweise Filter hinzufügen und dadurch die Helligkeit, den Kontrast und die Farbsättigung verändern. Ferner kann für Fotos eine Funktion zur Entfernung des "Rote-Augen"-Effektes bereitgestellt werden. Zweckmäßig ist ferner eine Funktion zum Drehen und Spiegeln von Bildern und zur Auswahl eines Bildausschnittes. In Verbindung damit können Funktionen für eine vergrößerte oder verkleinerte Ansicht eines Bildes bereitgestellt werden (Zoom-Funktionen).

Es ist vorzugsweise vorgesehen, dass bei Nutzung der Funktionen des Texteditors 24 und der Bildbearbeitungseinheit 23 die jeweiligen Ergebnisse direkt in dem zugewiesenen Text- bzw. Bildfeld als Vorschau abgebildet werden. Eine finale Anwendung der ausgewählten Funktionen kann gegebenenfalls erst dann durchgeführt werden, wenn ein Nutzer aktiv die Bearbeitung z.B. mittels Aktivierung eines entsprechenden Interaktionselements bestätigt.

Die Texteditorkomponente 23 und die Bildbearbeitungseinheit 23 stehen auf dem Applikationsserver 20 in Verbindung mit einem Speichermedium 22, in welchem die erstellten und bearbeiteten Text- und Bildinformationen hinterlegt sind. Da die Inhalte vorzugsweise von mehreren Nutzern bearbeitbar sein sollen, werden sie somit zentral auf dem Applikationsserver 20 hinterlegt und mehreren Nutzern über ihre Web Browser zur Verfügung gestellt. Eine Protokolleinheit 25 protokolliert die Aktionen der verschiedenen Nutzer auf den Dateninhalten. Die Applikation 21 verarbeitet somit die Bearbeitungsbefehle sowohl des Texteditors 24 als auch der Bildbearbeitungseinheit 23 und kombiniert sie in einer Druckdatei 40 einer oder mehreren Druckseiten.

In einem Ausführungsbeispiel der Erfindung steht der Applikationsserver 20 in Verbindung mit der Druck-Applikation 32 eines Drucksystems 30, das wenigstens einen Drucker 31 zur Erzeugung von Druckerzeugnissen 60 umfasst. Bei dem Drucker 31 handelt es sich vorzugsweise um einen Digitaldrucker. Das Drucksystem 31 kann sich entfernt von dem Applikationsserver 20 befinden und beispielsweise ebenfalls über eine Internetverbindung mit dem Applikationsserver 20 verbunden sein. Das Drucksystem 30 kann jedoch auch auf dem Applikationsserver 20 realisiert werden, so dass ein oder mehrere Drucker direkt an den Applikationsserver 20 angeschlossen sind. Die Darstellung der Fig. 1 ist somit nicht einschränkend zu verstehen, sondern stellt lediglich schematisch ein mögliches Ausführungsbeispiel der Erfindung dar.

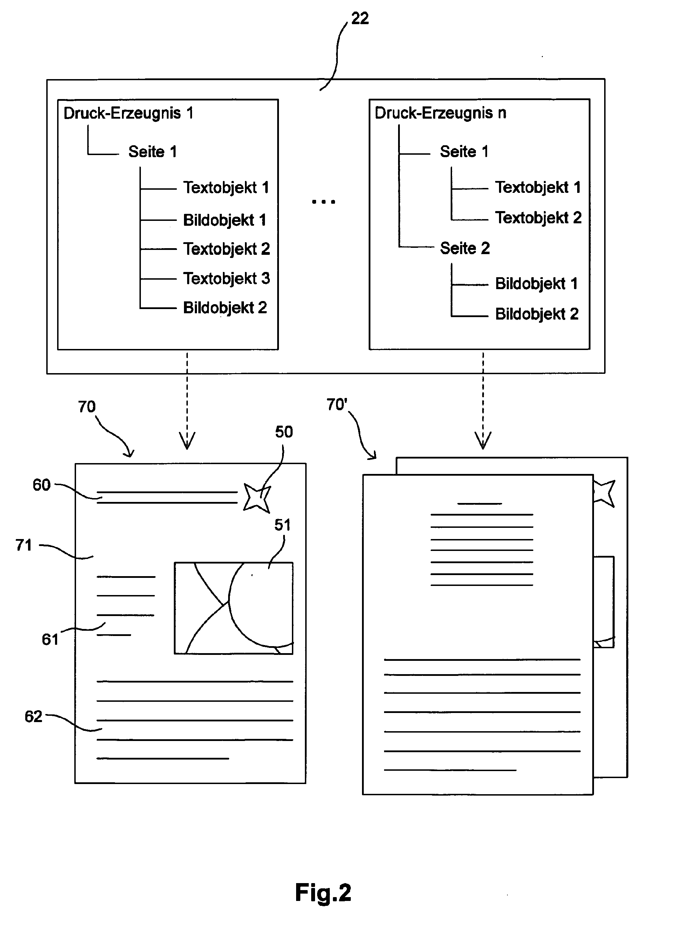

Erfindungsgemäß werden die verschiedenen Dateninhalte wie Bilder und/oder Texte im Speicher 22 Objekt-bezogen hinterlegt. Dies ist in Fig. 2 schematisch dargestellt. Für jedes Druckerzeugnis 1 bis n wird eine eigene Verzeichnisstruktur angelegt, die sich in die einzelnen Seiten des jeweiligen Druckerzeugnisses aufgliedert. Für jede Seite wird somit eine eigene Unterstruktur angelegt, wobei in dem Ausführungsbeispiel der Fig. 2 das erste Druckerzeugnis 70 nur eine Seite umfasst, während das zweite Druckerzeugnis 70' zwei Seiten umfasst. Jede Seite untergliedert sich weiter in einzelne Datenobjekte der Seite, wobei wenigstens zwischen Textobjekten und Bildobjekten unterschieden wird. Beispielsweise weist die Seite 1 des Druckerzeugnisses 70 drei Textobjekte 60, 61 und 62 und zwei Bildobjekte 50, 51 auf, die sich auch in der Darstellung der Druckseite 71 des Druckerzeugnisses 70 wieder finden. Beim Druckerzeugnis 70' dagegen besteht die erste Druckseite 71' aus zwei Textobjekten und die zweite Druckseite 72' aus zwei Bildobjekten, wie es der Darstellung der beiden Druckseiten des Druckerzeugnisses 70' zu entnehmen ist.

Die einzelnen Untergliederungen werden bei Erstellung des jeweiligen Druckerzeugnisses durch die web-basierte Applikation 21 im Speicher angelegt und ergänzt bzw. verändert, wenn Datenobjekte gelöscht oder hinzugefügt werden. Ferner werden Änderungen an den Datenobjekten von der Protokolleinheit 25 protokolliert und auf den Datenobjekten im Speicher 22 ausgeführt.

Dabei kann ein Datenobjekt durch eine Bearbeitung vollständig ersetzt werden, oder es wird eine zweite Version des Datenobjektes angelegt, so dass zu einem Datenobjekt stets mehrere Versionen vorliegen. Diese Vorgehensweise hat den Vorteil, dass so alle von den Nutzern erstellten Inhalte versioniert abgelegt werden.

Die jeweiligen Versionsstände können auf Interaktion des Nutzers oder automatisch gespeichert werden. Der Nutzer hat so die Möglichkeit, alte Versionsstände von Dateninhalten wiederherzustellen. Die jeweils alten Versionsstände können einem Nutzer als Vorschau im Editor angezeigt werden.

Ferner ist es möglich, dass eine finale Anwendung der ausgewählten Bearbeitungsfunktionen im Texteditor 24 oder in der Bildbearbeitungseinheit 23 erst dann durchgeführt wird, wenn ein Nutzer aktiv die Bearbeitung z.B. mittels Aktivierung eines entsprechenden Interaktionselements bestätigt. Vorherige Bearbeitungen werden dem Nutzer somit auf der jeweils angezeigten Seite nur als Vorschau präsentiert

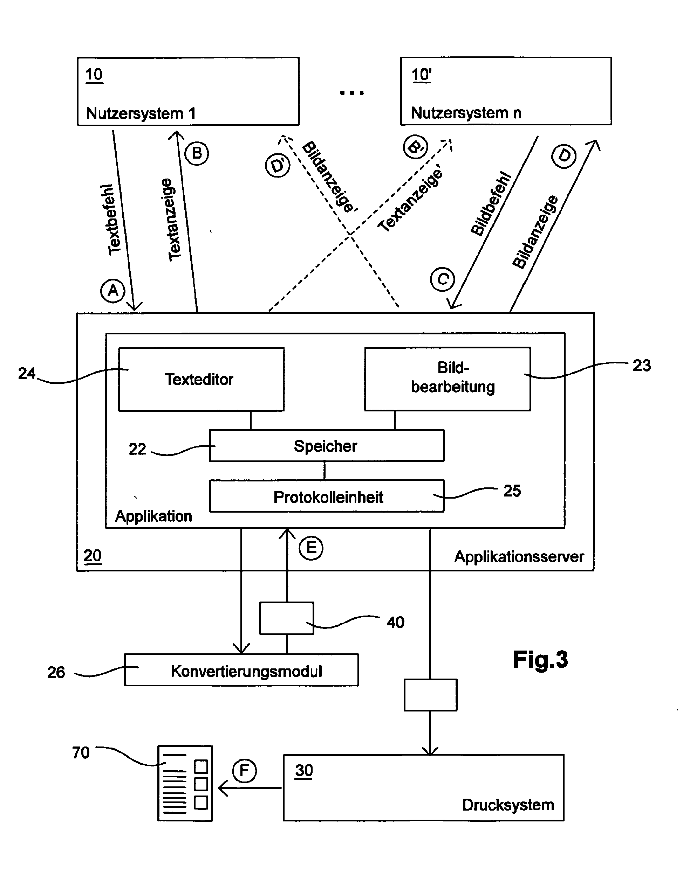

Die einzelnen Schritte des erfindungsgemäßen Verfahrens und die Abläufe in und zwischen den einzelnen Komponenten gemäß Fig. 1 werden im Folgenden beispielhaft anhand der schematischen Darstellung in Fig. 3 erläutert. Fig. 3 zeigt erneut mehrere Nutzersysteme 10, 10', die vorzugsweise über eine Internetverbindung mit dem Applikationsserver 20 verbindbar sind. Die Nutzer der Nutzersysteme erstellen jeweils für sich oder vorzugsweise gemeinsam ein Druckerzeugnis 70, das ein oder mehrere Druckseiten umfasst. Jede Druckseite kann wiederum ein oder mehrere Text- und Bildobjekte beinhalten. Sowohl die Texte als auch die Bildmotive können auf einer Druckseite von den Nutzern beliebig angeordnet und beliebig gestaltet werden. Werden für die Erstellung des Druckerzeugnisses hingegen Template-Vorlagen verwendet, kann dadurch beispielsweise wenigstens die Position und Größe von Text- und Bildinhalten festgelegt werden.

Es kann zweckmäßig sein, dass das Druckerzeugnis über ein gewähltes Mastertemplate erstellt wird, das Vorgaben definiert, die global für alle Seiten des Druckerzeugnisses gültig sind. Bei diesen Vorgaben kann es sich beispielsweise um globale Hintergrundfarben, definierte Schriftarten und eine Anzahl von Subtemplates handeln, welche das Layout des Druckerzeugnisses je Seite bestimmen. Ein Subtemplate definiert die seitenspezifischen Platzhalter, in welche Inhalte wie Bilder und Text von den verschiedenen Nutzern eingefügt werden können. Das Subtemplate legt somit fest, welcher Inhaltstyp an welcher Stelle der Seite positioniert werden kann. Die eigentliche Generierung der Inhalte findet über die Aktivierung der im Subtemplate hinterlegten Platzhalter (Bild oder Text) statt. Hierbei findet die Editierung der Inhalte vorzugsweise in einem WYSIWYG-Modus statt (What-you-see-is-what-you-get-Modus) direkt in einem von einem Nutzer aktivierten Platzhalter (Inline-Erstellung). Es können jedoch auch Templates gewählt werden, die eine weitestgehend freie Gestaltung des Druckerzeugnisses durch die Nutzer ermöglichen.

Möchte ein erster Nutzer über seinen Web Browser 11 beispielsweise ein neues Textfeld befüllen, gibt er den Text in das aufgerufene Texteditorfeld ein, das ihm über den Texteditor 24 der Applikation 21 auf der Anzeige 13 seines Computersystems 10 angeboten wird. In dem in Fig. 3 dargestellten Schritt A erhält der Texteditor 24 der Applikation 21 somit von der Eingabeeinrichtung 12 des Nutzers einen Textbefehl, den der Texteditor 24 ausführt und dem Nutzer im Schritt B den entsprechenden Text auf seiner Anzeige 13 anzeigt. Für das betreffende Druckerzeugnis wird im Speicher 22 ein neues Textobjekt angelegt und die Textinformationen mit zugehörigen Metadaten wie der Schriftgröße und der Schriftart darin hinterlegt.

Bei Metadaten handelt es sich im Sinne dieser Erfindung um jegliche Daten, die Informationen über Textinformationen enthalten, die von einem oder mehreren Personen erstellt wurden. Insbesondere handelt es sich um Daten, welche das optische Erscheinungsbild von Textinhalten in einem Texteditorfeld und auf einer späteren Druckseite eines Druckerzeugnisses betreffen.

Vorzugsweise können mehrere Personen gleichzeitig online einen Text bearbeiten. Ein zweiter Nutzer ist somit gleichzeitig mit dem Web Browser 11' seines Computersystems 10' online und kann die Texteingabe des ersten Nutzers mitverfolgen. Hierzu muss dem zweiten Nutzer die Texteingabe des ersten Nutzers in Echtzeit übertragen werden, was erfindungsgemäß dadurch möglich gemacht wird, dass dem Web Browser 11' des zweiten Nutzer aus dem Speicher 22 im Schritt B' nur das soeben neu erstellte Textobjekt übermittelt wird. Aus der Verzeichnisstruktur des Druckerzeugnisses wird somit nur das neu erstellte Textobjekt an den zweiten Web Browser 11' übermittelt, währen die unveränderten Datenobjekte nicht erneut übertragen werden müssen. Dies erfolgt für alle Nutzer, die zu dieser Zeit eine Vorschau der betreffenden Druckseite in ihrem Web Browser aufgerufen haben.

Durch diese Vorgehensweise wird die gemeinsame Erstellung eines Druck-Erzeugnisses über eine Online-Applikation möglich, wobei mehrere Nutzer in Echtzeit den Erstellungsprozess verfolgen können. Würden bei jeder Änderung alle Daten der betreffenden Druckseite an die diversen Web Browser übermittelt, könnte aufgrund der zu übertragenden Datenmengen keine Erstellung in Echtzeit ermöglicht werden

Der zweite Nutzer kann nun seinerseits das neu erstellte Textobjekt bearbeiten, wobei wiederum nur die Veränderung des Datenobjektes in Echtzeit an alle verbundenen Web Browser von Nutzern übertragen wird. Ein Text ist jedoch vorzugsweise für einen weiteren Nutzer gesperrt ist, so lange sich der Cursor eines anderen Nutzers innerhalb des betreffenden Texteditorfeldes befindet.

Der zweite Nutzer kann parallel auch ein bereits im Speicher 22 angelegtes Bildobjekt bearbeiten, wie es in Fig. 3 im Schritt C dargestellt ist. Das Computersystem 10' des zweiten Nutzers sendet einen entsprechenden Bildbefehl an die Bildbearbeitungseinheit 23 der Applikation 21, welche den Befehl für das betreffende Bildobjekt durchführt und dem Nutzer in Schritt D das Ergebnis der Bildbearbeitung in seinem Web Browser 11' anzeigt. Parallel dazu wird diese Bildbearbeitung auch allen weiteren Nutzern in Schritt D' angezeigt, wobei wiederum nur das bearbeitete Bildobjekt an die diversen Web Browser übermittelt wird, während unveränderte Dateninhalte nicht übertragen werden.

Möchte ein Nutzer über sein Nutzersystem 10 eine Bilddatei mit Hilfe der Applikation 21 in ein Druckerzeugnis 70 integrieren und hierbei gegebenenfalls bearbeiten, kann er beispielsweise auf vorgegebene Bilddateien zurückgreifen, die bereits in dem Speicher 22 des Applikationsservers 20 hinterlegt sind. Alternativ kann er eine Bilddatei seiner Wahl von seinem Computersystem 10 auf den Applikationsserver 20 hochladen. Diese Bilddatei hat vorzugsweise eine relativ hohe Auflösung, um die Qualität des zu erzeugenden Druck-Erzeugnisses auf einem Digitaldrucker zu gewährleisten.

Zweckmäßigerweise können bei einem Bild-Upload alle Bildformate hochgeladen werden, welche mittels eines Flash-Players im Web Browser der Nutzer weiterverarbeitet werden können. Beispielsweise können Bilddateien in den Formaten jpg, gif, png, tiff und bmp geladen werden. In einem Bildeditor besteht für die Nutzer die Möglichkeit, die jeweiligen Bildinhalte in einen dafür vorgesehenen Platzhalter zu laden. Bei der Zuweisung eines Bildes in den Bildplatzhalter kann auf der Basis der Abmessungen des entsprechenden Bildes die spätere Druckqualität überprüft werden. Sollte die Auflösung des Bildinhaltes zu gering sein, kann vorgesehen sein, dass der Nutzer eine Bestätigung abgeben muss, dass eventuell Qualitätseinbußen bei einem späteren Digitaldruck zu erwarten sind. Die Auflösung der vom ersten Nutzer hochgeladenen Bilddatei sollte somit ausreichend sein, um bei der gewählten Bildgröße einen Digitaldruck des Bildes in gewünschter Qualität zu gewährleisten. Da es die Bildbearbeitungseinheit 23 vorzugsweise ermöglicht, Ausschnitte aus einem Bild zu wählen, sollte die Auflösung der Original-Bilddatei so gewählt werden, dass auch kleinere Ausschnitte bei einer bestimmten Größe eines Bildplatzhalters noch eine ausreichende Auflösung aufweisen.

Die von einem Nutzer hochgeladene Bilddatei wird somit typischerweise eine hohe Auflösung von beispielsweise 100-300 dpi und damit eine hohe Dateigröße aufweisen. Typische Dateigrößen solcher Bilder hoher Auflösung liegen in der Größenordnung von 5-20MB. Diese Bilddatei wird im Speichermedium 22 des Applikationsservers als Bildobjekt 50 hinterlegt, damit sie von dort aus den mehreren Nutzern zur Ansicht und zur Bearbeitung bereitgestellt werden kann. Müsste nun diese Datei an die Web Browser eines jeden Nutzers übertragen werden, welcher die Bilddatei zu betrachten oder sogar zu bearbeiten wünscht, könnte dies aufgrund der Dateigröße nur sehr langsam erfolgen oder wäre aufgrund der beim Nutzer begrenzten Datenübertragungsgeschwindigkeiten sogar nicht möglich. Auch die erfindungsgemäße Vorgehensweise, bei nur ein bearbeitetes Bildobjekt an alle Web Browser übermittelt wird, während unveränderte Datenobjekte nicht erneut übertragen werden könnte dieses Problem nicht zufrieden stellend lösen.

Daher wird von der Applikation 21 zu der Bilddatei vorzugsweise wenigstens eine weitere Bilddatei mit einer Auflösung erstellt, die geringer ist als die Auflösung der Original-Datei. Dadurch verringert sich gegenüber der Original-Datei auch die Dateigröße dieser zweiten Bilddatei. Damit diese weitere Datei von den Nutzern über einen Web Browser als Vorschau auf das endgültige Druck-Erzeugnis betrachtet werden kann, hat sie beispielsweise eine Dateigröße in der Größenordnung von 200-300 Kilobyte, vorzugsweise von 250 Kilobyte.

Insbesondere damit den Nutzern bei der Bildbearbeitung auch Vergrößerungsfunktionen zur Verfügung stehen, würde eine Datei geringerer Dateigröße jedoch gegebenenfalls für eine solche Funktion nicht ausreichen. Würde dem Nutzer beispielsweise innerhalb einer Zoom-Funktion ein Ausschnitt aus dieser zweiten Datei angezeigt, würde sich die Auflösung des gewählten Ausschnittes reduzieren, was für den Nutzer auf der Anzeige 13 seines Computersystems 10 zu einer schlechteren Bildqualität führt. Um dem Nutzer auch für eine solche vergrößerte Bildansicht eine gute Bildqualität bieten zu können, wird von der Applikation 21 vorzugsweise wenigstens eine weitere Bilddatei erstellt und ebenfalls im Speichermedium hinterlegt. Diese Bilddatei weist eine Auflösung auf, die zwischen den Auflösungen der Original-Bilddatei und der zweiten Bilddatei liegt. Die Auflösung ist jedoch immer noch so gering, dass die resultierende Dateigröße eine problemlose Ansicht und Bearbeitung des Bildes in dem Web Browser eines Nutzers ermöglicht. Sind für mehrere Stufen der Vergrößerung und Verkleinerung innerhalb einer Zoom-Funktion der Bildbearbeitungseinheit 23 weitere Bilddateien mit speziell angepassten Auflösungen erforderlich, können hierfür von der Applikation 21 neben diesen Bilddateien weitere Bilddateien erstellt und im Speicher 22 hinterlegt werden.

Jeder der weiteren Bilddateien wird von der Applikation 21 ein Auswahlbefehl zugeordnet, und diese Zuordnung wird in der Applikation 21 hinterlegt. Beispielsweise wird der Bilddatei mit der geringsten Auflösung ein normaler Auswahlbefehl zugeordnet, wenn der Nutzer beispielsweise die Vorschau einer Seite des Druck-Erzeugnisses wählt, auf der sich das betreffende Bild befindet. Dagegen kann eine Bilddatei mit relativer hoher Auflösung einem Auswahlbefehl zugeordnet werden, der eine Vergrößerungsfunktion beinhaltet.

Diese Auswahlbefehle müssen von einem Nutzer nicht explizit an der Eingabeeinrichtung 12 eingegeben werden, sondern sie ergeben sich zweckmäßigerweise implizit aus den Aktionen des Nutzers auf der Oberfläche des Web Browsers. Ferner muss es sich nicht um eine direkte Zuordnung handeln, sondern die Zuordnung kann sich auch durch eine in der Applikation 21 beinhaltete Programmierung ergeben.

Wählt nun der erste Nutzer über die Eingabeeinrichtung 12' seines Computersystems 10' eine Ansicht eines Bildes innerhalb des Layouts des zu erstellenden Druck-Erzeugnisses aus, wird dieser Auswahlbefehl über den Web Browser 11' an die Applikation 21 übermittelt und von dieser ausgewertet. Der Auswahlbefehl kann beispielsweise beinhalten, dass das Bild als Vorschau in normaler Ansicht angezeigt werden soll. Es kann sich jedoch auch um einen Vergrößerungsbefehl handeln, der eine vergrößerte Ansicht des Bildes auswählt. Die Applikation 21 wählt zur Ausführung dieses Auswahlbefehls die zugeordnete Bilddatei aus und zeigt sie dem Nutzer auf der Anzeige 13' seines Computersystems 10' als aktuelle Arbeitsdatei an. Wählt der Nutzer anschließend eine andere Ansicht des Bildes aus, würde dieser neue Auswahlbefehl erneut von der Applikation 21 ausgewertet und dem Nutzer gegebenenfalls eine andere Bilddatei als Arbeitsdatei zur Ansicht angezeigt, falls diese eine für diese Auswahl günstigere Auflösung aufweisen würde.

Nimmt der Nutzer nun eine Bearbeitung der Datei vor, wird der Applikation 21 von dem Nutzersystem 10' ein entsprechender erster Bearbeitungsbefehl übermittelt. Die Bildbearbeitungseinheit 23 der Applikation 21 führt diesen Bearbeitungsbefehl auf der aktuellen Arbeitsdatei und erzeugt so eine bearbeitete Arbeitsdatei, welche auf der Anzeige 13' im Nutzersystem 10' angezeigt wird. Dabei kann die neue Bilddatei die vorherige Bilddatei im Speicher 22 ersetzen, oder es wird eine weitere Bilddatei erstellt, so dass im Speicher für diese bestimmte Auflösung eine unbearbeitete und eine bearbeitete Bilddatei vorliegen.

Der Bearbeitungsbefehl des Nutzers kann parallel auf der Original-Bilddatei mit hoher Auflösung und/oder den weiteren Bilddateien mit geringerer Auflösung durchgeführt werden. Alternativ kann der Bearbeitungsbefehl in der Protokolleinheit 25 protokolliert und erst zu einem späteren Zeitpunkt auf anderen Dateien ausgeführt werden. Insbesondere kann es zweckmäßig sein, die Bearbeitung der Original-Bilddatei anhand der protokollierten Bearbeitungsbefehle erst zu einem späteren Zeitpunkt durchzuführen und nicht zeitnah zur Bearbeitung von Vorschau-Bilddateien im Web Browser eines Nutzers.

Die beschriebenen Schritte können sich nun beliebig oft wiederholen, wobei ein Nutzer beispielsweise weitere Bearbeitungsbefehle für die aktuelle Arbeitsdatei erzeugen kann. Er kann jedoch auch für weitere Bearbeitungsbefehle eine andere Ansicht wählen. Durch einen Auswahlbefehl könnte er beispielsweise anstatt der bisherigen vergrößerten Ansicht nun eine normale Ansicht des Bildes wählen. In diesem Fall würde die Applikation 21 dem Nutzer die entsprechende Bilddatei mit geeigneter Auflösung anzeigen. Damit diese Bilddatei die bereits vom Nutzer durchgeführten Bearbeitungen enthält, könnte dem Nutzer sofort eine parallel erzeugte Bilddatei als Arbeitsdatei angezeigt werden. Alternativ können die in der Protokolleinheit 25 protokollierten Bearbeitungsbefehle erst jetzt zeitnah auf diese Bilddatei angewendet und dem Nutzer als Ergebnis ebenfalls die bearbeitete Bilddatei als neue Arbeitsdatei angezeigt werden.

Die gleichen Prozesse können vorgesehen sein, um dem ersten Nutzer des Computersystems 10 zu erlauben, die Bildbearbeitungsvorgänge des zweiten Nutzers am Computersystem 10' in Echtzeit zu verfolgen. Beiden Nutzern werden stets die aktuellen Versionen von Text- oder Bildobjekten als Vorschau angezeigt. Falls sich die Ansichten der beiden Nutzer unterscheiden, kann es beispielsweise zweckmäßig sein, einem Nutzer ein bearbeitetes Bildobjekt in einer geringen Auflösung anzuzeigen, während einem anderen Nutzer das gleiche Bildobjekt in einer höheren Auflösung präsentiert wird, weil dieser beispielsweise eine Vergrößerungsfunktion gewählt hat. Bei Versionen des Bildobjektes müssen jedoch den aktuellen Status des betreffenden Bildobjektes wiedergeben.

Für den späteren Ausdruck eines hochwertigen Druckerzeugnisses ist die Erzeugung einer Druckdatei 40 erforderlich, wobei die im Speicher 22 hinterlegten Datenobjekte verwendet werden. Hat eine Versionierung der einzelnen Bearbeitungsstufen stattgefunden, dürfen nun nur die endgültigen Versionen der einzelnen Datenobjekte verwendet werden. Die einzelnen Datenobjekte einer Druckseite, die bisher getrennt voneinander gehandhabt wurden, müssen hierbei zu einer Druckseite kombiniert werden. Diese Konvertierung der gesammelten Dateninhalte in eine Druckdatei 40 kann beispielsweise durch ein Konvertierungsmodul 26 erfolgen, das an den Applikationsserver angeschlossen ist, oder auf diesem realisiert ist. Der zugehörige Konverter kann beispielsweise in PHP5 realisiert werden. Zur Erstellung der pdf-Datei kann das PHP-Modul PDFLib verwendet werden.

Sobald die Online-Erstellung des Druckerzeugnisses durch die verschiedenen Nutzer abgeschlossen ist, erhält die Applikation 21 einen Konvertierungsbefehl und konvertiert die Dateninhalte in eine Druckdatei wie ein pdf-Dokument. Erfolgt die Konvertierung durch das externe Konvertierungsmodul, müssen diesem die zu konvertierenden Dateninhalte bereitgestellt werden. Die so erstellte Druckdatei im pdf-Format wird der Applikation 21 zurückgeliefert, welche sie beispielsweise dem Drucksystem 30 für einen Ausdruck übergeben kann.

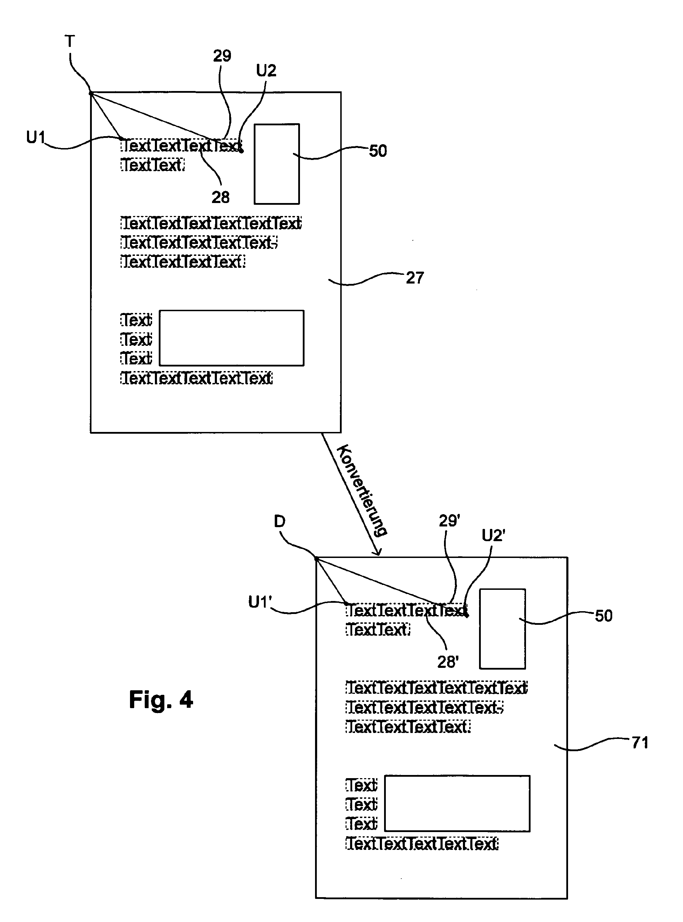

Um zu gewährleisten, dass insbesondere Textinformationen im zu erstellenden Druckerzeugnis genauso erscheinen, wie sie sich den Nutzern in der Vorschau in ihren Web Browsern dargestellt hat, können den üblichen Metadaten zu Textinformationen wie Schriftart und Schriftgröße durch den Texteditor 24 weitere Informationen über das Erscheinungsbild der Textinformationen hinzugefügt werden, um diese anschließend bei einer Konvertierung der Textinformationen in ein pdf-Dokument verwenden zu können. Diese zusätzlichen Metadaten werden anhand der schematischen Darstellung eines Texteditorfeldes 27 und einer Druckseite 71 eines zu erstellenden pdf-Dokuments in Fig. 4 erläutert. Im Texteditorfeld 27 wurden von den Nutzern mehrere Textzeilen 28 erstellt und gegebenenfalls durch Bildmotive 50 ergänzt. Die Länge der einzelnen Textzeilen kann dabei stark variieren, und bei der Texterstellung können sich beispielsweise Zeilenumbrüche ergeben, bei denen einzelne Wörter durch einen Bindestrich getrennt werden. Insbesondere die Zeilenumbrüche sollen in dem zu erstellenden Druckerzeugnis originalgetreu wiedergegeben werden. Hierzu wird um jede Textzeile 28 ein fiktiver rechteckiger Umriss 29 erstellt, der zwei diagonal gegenüber liegende Eckpunkte U1 und U2 aufweist. In Fig. 4 befindet sich der erste Eckpunkt U1 beispielsweise an der oberen linken Ecke des Umrisses 29, während sich der zweite Eckpunkt U2 an der unteren rechten Ecke befindet. Ferner wird im Texteditorfeld 27 ein Bezugspunkt T definiert, der in dem dargestellten Ausführungsbeispiel in der oberen linken Ecke des Texteditorfeldes 27 angeordnet ist. Der Bezugspunkt T kann jedoch beliebig gewählt werden.

Der Umriss 29 wird vorzugsweise so um die betreffende Textzeile 28 gelegt, dass er die Textinformationen der Textzeile 28 an allen vier Seiten berührt. Der rechteckige Umriss 29 wird somit gerade so klein gewählt, dass die gesamten Textinformationen einer Textzeile 28 innerhalb des Umrisses 29 liegen. Alternativ kann ein Abstand der Seiten des fiktiven rechteckigen Umrisses 29 zu den Textinformationen gewählt werden, so dass die Seiten des Umrisses 29 die Textinformationen nicht berühren. Der Umriss 529 kann ferner einige Seiten der Textinformationen berühren, während er zu anderen Seiten beabstandet ist. In jedem Fall muss die gewählte Vorgehensweise analog auf einen Umriss 29' übertragen werden, der dann in einer Druckseite 71 zu erstellen ist.

Anhand des fiktiven Rechteckes 29 kann die Größe und Lage der betreffenden Textzeile 28 innerhalb des Texteditorfeldes 27 bestimmt werden. Hierzu wird der Abstand zwischen dem ersten Eckpunkt U1 und dem Bezugspunkt T und dem zweiten Eckpunkt U2 und dem Bezugspunkt T ermittelt. Diese Abstände werden vorzugsweise in der Einheit Millimeter bestimmt, indem die Abmessungen des Texteditorfeldes mit den Abmessungen einer späteren Druckseite gleichgesetzt werden. Da die Abmessungen einer zu erstellenden Druckseite bekannt sind und das Texteditorfeld das gleiche Format wie diese Druckseite aufweist (z.B. DIN A5), können die Abmessungen einer Druckseite entsprechend auf die Abmessungen des Texteditorfeldes 27 übertragen werden. Diese Übertragung ist unabhängig von der realen Größe des Texteditorfeldes 27 auf der Anzeige 13 eines Nutzers.

Dabei ist unter einem fiktiven rechteckigen Umriss ein Rechteck zu verstehen, das im Texteditorfeld 27 für den Nutzer nicht sichtbar wird. Das Rechteck wird lediglich im Hintergrund zu jeder Textzeile 28 erzeugt und für eine Berechnung der Lage und Größe einer Textzeile verwendet.

Die beiden ermittelten Abstände der Eckpunkte des Umrisses 29 zum Bezugspunkt T des Texteditorfeldes 27 werden zusammen mit wenigstens der Schriftart und der Schriftgröße der Textinformationen der Textzeile 28 als Metadaten zum betreffenden Textobjekt im Speicher 22 der Applikation 21 hinterlegt. Dies erfolgt vorzugsweise für jede Textzeile im Texteditorfeld. Dabei kann es vorgesehen sein, dass veränderte Metadaten immer dann neu im Speicher 22 hinterlegt werden, wenn ein Nutzer eine Bearbeitung einer Textzeile 28 vorgenommen hat und sich die Abstände der Eckpunkte U1 und U2 zum Bezugspunkt T dadurch geändert haben. Alternativ kann vorgesehen sein, dass die Metadaten bezüglich der Lage und Größe einer Textzeile 28 erst dann einmalig erzeugt und im Speicher 22 hinterlegt werden, wenn die Bearbeitung eines Textfeldes abgeschlossen ist und als "fertig bearbeitet" gekennzeichnet wurde.

Bei der Konvertierung der Textinformationen greift das Konvertierungsmodul 26 auf die Metadaten der jeweiligen Textzeilen zurück. Aus den Abständen der Eckpunkte der jeweiligen rechteckigen Umrisse jeder Textzeile kann der Konverter die Lage und Größe des jeweiligen Umrisses im Texteditorfeld bestimmen. Diese Informationen überträgt er auf eine Druckseite 71 der zu erzeugenden Druckdatei 40, indem in der Druckseite 71 ein Umriss 29' in der gleichen Position und mit der gleichen Größe erzeugt wird. Dieser Umriss weist die diagonal gegenüber liegenden Eckpunkte U1' und U2' auf. Hierzu ist es erforderlich, dass ein Bezugspunkt D der Druckseite 71 definiert wird, dessen Position der Position des Bezugspunktes T im Texteditorfeld 27 entspricht. Dies ist in Fig. 4 dargestellt.

Bei der Konvertierung werden in der Druckseite 71 des zu erstellenden pdf-Dokuments 40 in den so erstellen Umriss 29' die zugehörigen Textinformationen in der gewählten Schriftgröße und Schriftart eingefügt. Dies erfolgt bis zu einem bestimmten Grad unabhängig von Zeichenabständen und Wortlängen, die sich sonst durch die gewählte Schriftart und Schriftgröße ergeben würden. Vielmehr wird der Umriss 29' vertikal und horizontal vollständig so mit dem Text gefüllt, dass der Umriss 29' die entstehende Textzeile 28' an allen Seiten berührt. Dies entspricht dem Erscheinungsbild der Textzeile 28 im Texteditorfeld 27 der Nutzer, das so genau auf das Erscheinungsbild der Druckseite 71 übertragen wird. Dieser Vorgang wird für alle Textzeilen durchgeführt und es werden auch die Bildmotive der Bildobjekte 50 auf der Druckseite platziert, so dass die gesamte Druckseite 71 eine weitestgehend genaue Wiedergabe der entsprechenden Vorschauseite in den Web Browsern der Nutzer darstellt. Falls das Druckerzeugnis 70 über mehrere Druckseiten verfügt, wird der Vorgang für die Textinformationen mehrerer Druckseiten des pdf-Dokuments durchgeführt und so eine Druckdatei 40 mit mehreren Druckseiten erzeugt.

In einem Ausführungsbeispiel der Erfindung werden Daten mit 300dpi-Auflösung in die pdf-Datei eingebettet. Die Druckdatei 40 wird an das Drucksystem 30 übermittelt oder dem Drucksystem auf dem Applikationsserver 20 zum Download bereitgestellt. Ein Drucker des Drucksystems 30 druckt das Druckerzeugnis 70 im Schritt F der Fig. 3 aus, wobei zuvor beispielsweise anhand einer Liste eine Sichtprüfung nach unzulässigen Inhalten durchgeführt werden kann.

Ergänzend kann ein pdf-Dokument in geringerer Auflösung von etwa 72dpi erstellt und einem oder mehreren Nutzern der Online-Applikation 21 bereitgestellt werden. Der Nutzer kann diese Datei über seinem Web Browser 11 auf seinem lokalen Drucker 15 ausdrucken oder von dem Applikationsserver 20 auf sein lokales Computersystem 10 herunterladen. Ferner kann auch die Sichtprüfung im Drucksystem 30 anhand des pdf-Dokuments mit einer Auflösung von etwa 72dpi durchgeführt werden.

Die Druckleistung des Drucksystems 30 und/oder die Bereitstellung der Applikation 21 mit ihren Funktionen kann einem oder mehreren Nutzern in Rechnung gestellt werden, was über übliche Verfahren erfolgen kann.

Bezugszeichenliste:
- 10,10': Erstes Computersystem, Nutzersystem
- 11,11': Web Browser
- 12: Eingabeeinrichtung, Tastatur, EDV-Maus
- 13: Anzeige, Monitor, Display
- 14: Speicher Nutzersystem
- 15: Drucker Nutzersystem
- 16: Internetverbindung
- 20: Zweites Computersystem, Applikationsserver
- 21: Applikation
- 22: Speicher Applikationsserver
- 23: Bildbearbeitungseinheit
- 24: Texteditor
- 25: Protokolleinheit
- 26: Konvertierungsmodul
- 27: Texteditorfeld
- 28,28': Textzeile
- 29,29': Umriss, fiktiv
- 30: Drucksystem
- 31: Drucker Drucksystem
- 32: Druckapplikation
- 40: Druckdatei
- 50,51: Bildobjekt
- 60,61,62: Textobjekt
- 70,70': Druckerzeugnis
- 71,71',72': Druckseite

- T: Bezugspunkt Texteditorfeld
- U1, U2: Eckpunkt Umriss Texteditorfeld
- D: Bezugspunkt Druckseite pdf-Dokument

- U1', U2': Eckpunkt Umriss Druckseite pdf-Dokument

## Patentansprüche

1. Verfahren zur Erzeugung einer Druckdatei (40) aus Daten, die in einem Speicher (22) auf einem Applikationsserver (20) hinterlegt sind, wobei die Daten vor der Erzeugung der Druckdatei (40) gleichzeitig über Web Browser (11 ;11') jeweils auf einer Anzeige (13;13') mehrerer Computersysteme (10;10') zur Ansicht bereitgestellt werden, und die Daten durch eine web-basierte Datenbearbeitungskomponente (23;24) mittels jeweils einer Eingabeeinrichtung (12;12') der Computersysteme (10;10') erstellt und bearbeitet werden, wobei erstellte und bearbeitete Daten in dem Speicher (22) abgelegt und über die Web Browser (11;11') den Anzeigen (13;13') der mehreren Computersysteme (10;10') zur Ansicht bereitgestellt werden,
**dadurch gekennzeichnet, dass** die Daten in dem Speicher (22) in Form von mehreren Datenobjekten hinterlegt werden, wobei eine Druckseite (71;71') der Druckdatei (40) aus wenigstens zwei Datenobjekten besteht, und ein durch die Datenbearbeitungskomponente (23;24) neu erstelltes oder bearbeitetes Datenobjekt über die Web Browser (11;11') in Echtzeit den Anzeigen (13;13') der Computersysteme (10;10') übermittelt wird, wobei nur das betreffende Datenobjekt neu an die Web Browser (11;11') übermittelt wird, und dass eine Anwendung (21) auf dem Applikationsserver (20) nach Abschluss der Bearbeitungsvorgänge durch die Datenbearbeitungskomponente (23;24) einen Konvertierungsbefehl erhält, woraufhin aus den Datenobjekten einer Druckseite (71;71') eine Druckdatei (40) erzeugt wird.

2. Verfahren nach Anspruch 1,
**dadurch gekennzeichnet, dass** eine Druckdatei (40) im pdf-Format erzeugt wird.

3. Verfahren nach einem der Ansprüche 1 und 2,
**dadurch gekennzeichnet, dass** die Druckdatei (40) mehrere Druckseiten (71;71') beinhaltet.

4. Verfahren nach einem der Ansprüche 1 bis 3,
**dadurch gekennzeichnet, dass** der Konvertierungsbefehl von der Anwendung (21) an ein Konvertierungsmodul (26) übermittelt wird, welches die Druckdatei (40) erzeugt und die Druckdatei (40) von dem Konvertierungsmodul (26) an die Anwendung (21) übermittelt wird, welche sie einem Drucksystem (30) bereitstellt, das aus der Druckdatei (40) ein Druckerzeugnis (70;70') druckt.

5. Verfahren nach einem der Ansprüche 1 bis 4,
**dadurch gekennzeichnet, dass** die web-basierte Datenbearbeitungskomponente wenigstens einen Texteditor (24) und/oder eine Bildbearbeitungseinheit (23) umfasst.

6. Verfahren nach einem der Ansprüche 1 bis 5,
**dadurch gekennzeichnet, dass** jeweils ein Datenobjekt für wenigstens ein Bildobjekt (50) und wenigstens ein Textobjekt (60) im Speicher (22) hinterlegt wird.
